# EUROPEAN PATENT APPLICATION

(11) **EP 3 006 354 A1**
(43) Date of publication of application: **13.04.2016**
(21) Application number: 14425128.7
(22) Date of filing: 09.10.2014
(51) Int. Cl.: B65B 41/16, B65B 57/04, B65B 7/16, B29C 65/74, B65B 9/04

(54) **Film spoiling prior to cutting**

(71) Applicant: Mondini, Nazzareno, 25033 Cologne Bresciano (IT)
(72) Inventor: Mondini, Nazzareno, 25033 Cologne Bresciano (IT)

(57) **Abstract**

A film conveyor system in which the pulling or dragging force on the film (7) is not applied to the extremity of the film but rather to the part of the film not yet utilised during the heat sealing phase of the process, so that the entire film (7) reacts to the force and not just the flash (8). In this way, the quantity of film not used in the packaging is drastically reduced, thus lowering production costs.

## Description

The industrial/ production environment at which the idea in question is aimed is the one in which machinery and equipment are used in the foodstuff, chemical, pharmaceutical, non-pharmaceutical and other similar sectors to hermetically seal containers with a lid (or even a film made from different materials or a pre-formed lid), to protect the products and isolate them from potentially pollutant environments, avoiding the risk of contamination.

Said sealing operation occurs by means of machines and equipment essentially consisting of various electromechanical units with different functions, such as the container locating unit that positions the product-filled containers correctly in the heat sealing area, or the heat sealing unit, which consists of various synchronised moving parts designed to apply sufficient force to seal the containers, and the film feeder unit.

The function of the latter unit, which is the subject of this discussion, is to position the film from which the lid that seals the package is formed, over the container and between the two sections of the die. As previously described, the lid may be pre-formed or drawn off a spool of film, as is the case with this innovation.

Simplifying the description we can say that the container/s previously filled with the product to be protected, is/are positioned between two halves of a die and placed into a special cavity formed in the die itself and is/are sealed by the heat sealer on which the die is mounted by the application of a lid that is heat sealed onto the container along a well defined line on the top edge of the container itself (heat seal area) by applying heat and pressure for a specific period of time so as to fuse together the respective materials of container and lid.

This portion of covering is unrolled from a section of spool and must be properly positioned, aligned and properly stretched prior to being sealed onto the container to avoid any creases, folds and overlapping of the edges.

This operation is generally performed by applying a pulling force on the end of the film to unwind a sufficient amount of it from the spool for the next sealing cycle: the end of the film is the part from which the portion used for the previous lid was obtained.

Once the cutting and sealing operation has been completed, the leftover piece of film, called the flash, is essentially a waste product, in other words film that does not form part of any package yet impacts on the cost of the packaging itself.

When the heat sealer performs its task of preparing a portion of film for the next cycle, it applies the aforesaid pulling force on this flash.

The dimensions of the flash must be sufficient to withstand the pulling force required to unwind the next portion of film from the spool.

Furthermore, as previously described, it is essential that the portion of film in use is properly positioned and taut: this means that the flash must be able to withstand the level of tension of the film in the opposite direction to that of the unwinding.

These two opposing forces, namely the unwinding traction and the tensioning, which are specific to every type of bobbin spool and the associated material, are directly responsible for dictating the dimension of the flash: the greater the force that the flash must be able to withstand, the greater the size of the film to be used so as to ensure that it does not give way or tear during the pulling stage.

The state of the art is that, generally speaking, the heat sealer applies the pulling force to the flash in order to properly locate it in a certain position within the heat sealing area and uses an opposing force to generate the required tension.

The innovative step of this invention is the use of a film conveyance system that applies the pulling or dragging force not to the end of the film, in other words to the flash, but rather to the as yet unutilised part of the film so that the entire film reacts to the pulling force and not merely the flash.

In this way, the amount of film not used in the packaging is drastically reduced, thereby cutting production costs.

In order to achieve this it is essential to control the film tension throughout the entire production cycle and this innovation does that by utilising the synergy between two motors or two servo-motors or other conveying parts in order to ensure the "proper" unwinding of the previously described film.

The first servo-motor or other conveying element, which we will call the Master, is responsible for unwinding the portion of film required for the next cycle, from the spool.

The second conveying part, which will be referred to hereinafter as the Slave, is responsible for controlling the tensioning.

During the course of their respective operating cycles, in the case of servo-motors an electronic system controls the relative motion of the two moving parts with the following objectives:
I. to spool off the required portion of film
II. to ensure proper tensioning
III. to avoid tearing the film.

Achieving these objectives leads to the possibility of being able to make use of a less robust, narrower and therefore cheaper covering film than was previously possible, which is dimensioned purely in the interests of ensuring adequate product protection without the need for additional strength to cope with the pulling forces, which are now handled by the heat sealer itself.

### Below are a number of explanatory diagrams

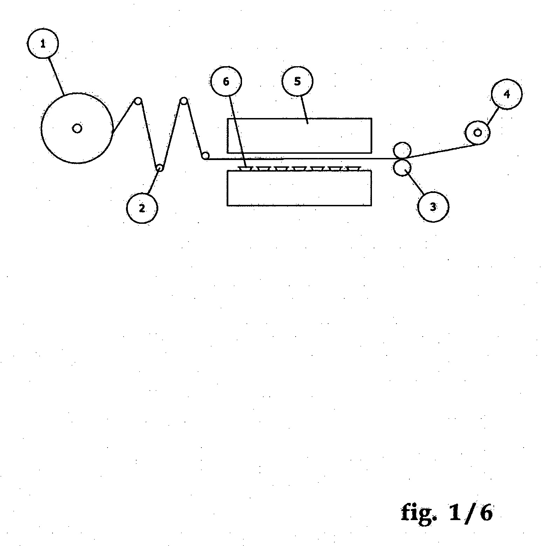

Figure 1 shows the current state of affairs in terms of the method used to control the unwinding of the film.
   The spool (1) is loaded in the heat sealer, passing through the floating component (2) and then into the die (5) where the containers (6) to be sealed are located. The spool (1) then passes through the spool unwinding mechanism (3), finally reaching the flash gathering mechanism (4).

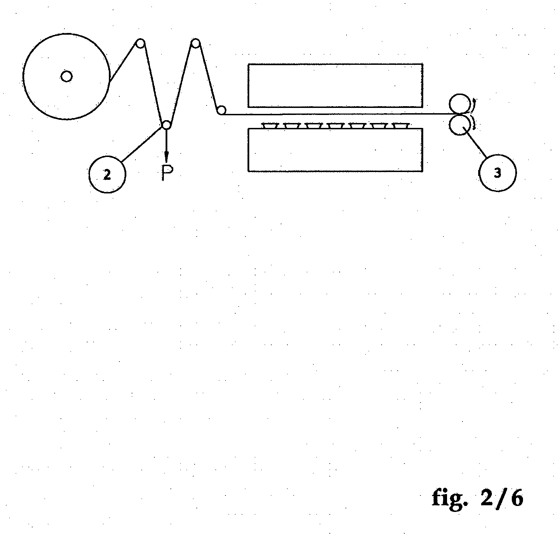

Figure 2 highlights the film tensioning resulting from the interaction between the film unwinding mechanism (3) and the opposing force generated by the floating component (2)

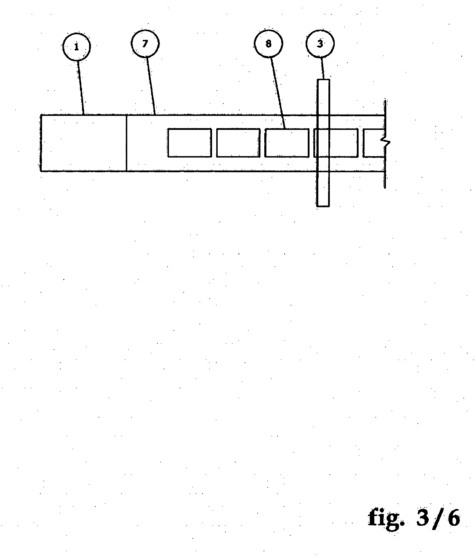

Figure 3 shows a view from above of the spool or film (1), the spool unwinding mechanism (3), the unwound film (7), the size of the leftover spool and the part of the film not utilised on the container, called the flash (8)
Figure 4 shows the dimensions of the part of the film (1) on which the unwinding force is applied (3) and the tension force generated by the weight (9)

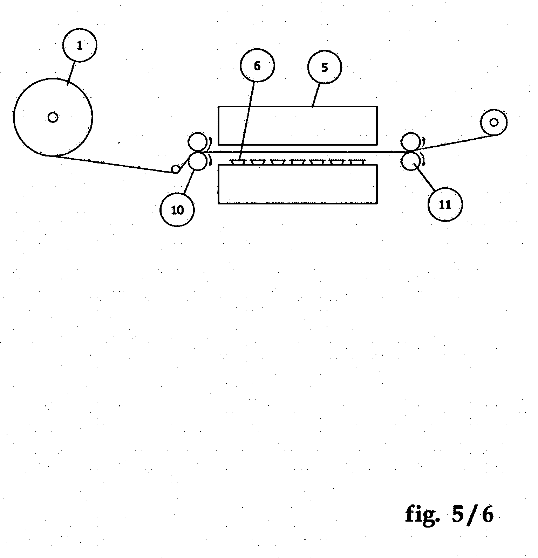

Figure 5 shows one way of applying the described innovation. It highlights the positions of the two moving parts with the Master (10) located at the entrance to the die (5) and the Slave (11) at the exit, where the flash appears.
Figure 6 shows the dimensions of the portion of film, or the contact area (12), which is utilised by the Master (10) to unwind the film.

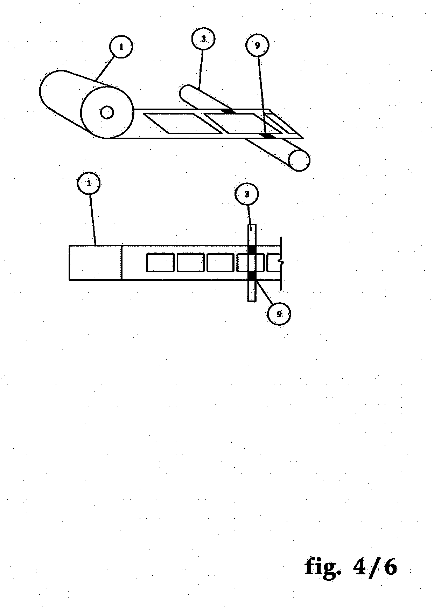

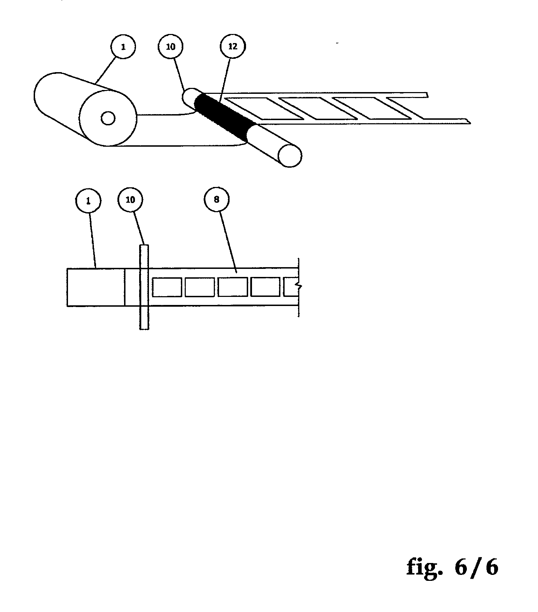

A comparison of Figure 4 and Figure 6 highlights the difference in the size of the film or spool that has to be used in the production process utilising the traditional method versus that introduced by this patent.

## Claims

1. A film conveyor system in which the pulling or dragging force on the film is not applied to the extremity of the film, in other words to the flash, but rather to the part of the film not yet utilised during the heat sealing phase of the process, so that the entire film reacts to the force and not just the flash.

2. In accordance with the first claim, the synergy between two motors or servo-motors, or other hydraulic or pneumatic drive units is used to control the film tension during the production cycle so as to guarantee that the aforesaid film is fed evenly into the unit.
